# EUROPEAN PATENT APPLICATION

(11) **EP 4 456 207 A1**
(43) Date of publication of application: **30.10.2024**
(21) Application number: 21968379.4
(22) Date of filing: 23.12.2021
(51) Int. Cl.: H01M 8/0202, H01M 8/0206, H01M 8/0247, H01M 8/12

(54) **SOLID OXIDE FUEL CELL**

(71) Applicant: NISSAN MOTOR CO., LTD., Kanagawa 221-0023 (JP)
(72) Inventor: ICHIHARA, Keiji, Atsugi-shi, Kanagawa 243-0123 (JP)
(74) Representative: Grünecker Patent- und Rechtsanwälte PartG mbB
(86) International application number: PCT/JP2021/048053
(87) International publication number: WO 2023/119602

(57) **Abstract**

Provided is a solid oxide fuel cell that includes a plurality of laminated power generation cells each including a solid electrolyte layer, an anode electrode disposed on one surface of the solid electrolyte layer, a cathode electrode disposed on the other surface of the solid electrolyte layer, and a porous metal support layer disposed on at least one of an anode electrode side or a cathode electrode side, a separator provided between the power generation cells and separated from the porous metal support layer and an interconnector located between the separator and the porous metal support layer. An anode flow path for supplying a fuel to the anode electrode is formed between the anode electrode side of the power generation cell and the separator, and a cathode flow path for supplying air to the cathode electrode is formed between the cathode electrode side of the power generation cell and the separator. The interconnector includes a portion joined to the separator and a portion joined to the porous metal support layer, and is welded to the porous metal support layer at the portion joined to the porous metal support layer.

## Description

### TECHNICAL FIELD

The present invention relates to a solid oxide fuel cell.

### BACKGROUND ART

JP 2006-236989A disclose a fuel cell stack in which unit battery cells each including porous metal support layers on outer sides of an anode electrode and a cathode electrode with a solid electrolyte sandwiched therebetween are laminated. This fuel cell stack includes a metal separator that forms a fuel gas (anode gas) flow path and an air (cathode gas) flow path between the unit battery cells, and the separator and the porous metal support layer are metal-joined.

### SUMMARY OF INVENTION

As a method for joining the metal separator and the porous metal support layer, welding generally has low electric resistance between the metal separator and the porous metal support layer after the joining and has high robustness against displacement during operation of a fuel cell, creep of a base material, and the like, as compared with joining using a contact paste, brazing, or the like. That is, the welding is excellent in conductivity (power generation efficiency) and robustness.

However, welding between a metal and a porous layer may cause defects such as a blowhole. When the metal separator and the porous metal support layer are welded to each other, if a crack or the like occurs in the separator due to a welding defect, the anode gas and the cathode gas are mixed, and the power generation efficiency decreases.

The present invention has been made in view of the above problems, and an object thereof is to provide a solid oxide fuel cell excellent in power generation efficiency and robustness.

According to an aspect of this invention, there is provided a solid oxide fuel cell that includes a plurality of laminated power generation cells each including a solid electrolyte layer, an anode electrode disposed on one surface of the solid electrolyte layer, a cathode electrode disposed on the other surface of the solid electrolyte layer, and a porous metal support layer disposed on at least one of an anode electrode side or a cathode electrode side, a separator provided between the power generation cells and separated from the porous metal support layer and an interconnector located between the separator and the porous metal support layer. An anode flow path for supplying a fuel to the anode electrode is formed between the anode electrode side of the power generation cell and the separator, and a cathode flow path for supplying air to the cathode electrode is formed between the cathode electrode side of the power generation cell and the separator. The interconnector includes a portion joined to the separator and a portion joined to the porous metal support layer, and is welded to the porous metal support layer at the portion joined to the porous metal support layer.

### BRIEF DESCRIPTION OF DRAWINGS

[FIG. 1] FIG. 1 is an exploded perspective view of a fuel cell stack according to an embodiment of the present invention.
[FIG. 2] FIG. 2 is an exploded perspective view of a portion in which power generation units in FIG. 1 are laminated.
[FIG. 3] FIG. 3 is a schematic cross-sectional view taken along a line III-III in FIG. 2.
[FIG. 4] FIG. 4 is an enlarged view of a portion surrounded by a rectangle A in FIG. 3.

### DESCRIPTION OF EMBODIMENTS

Hereinafter, embodiments of the present invention will be described with reference to the drawings and the like.

### [First Embodiment]

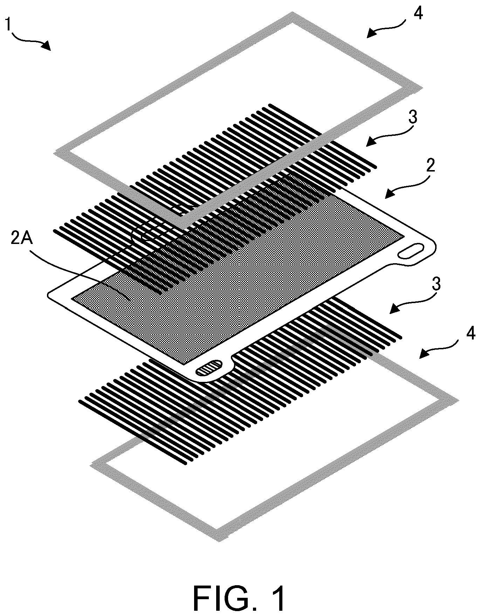

FIG. 1 is an exploded perspective view of a power generation unit 1 constituting a power generation module of a solid oxide fuel cell 100 (hereinafter, also simply referred to as "fuel cell") according to the present embodiment. The solid oxide fuel cell 100 according to the present embodiment is mainly mounted on a vehicle or the like, but is not limited thereto.

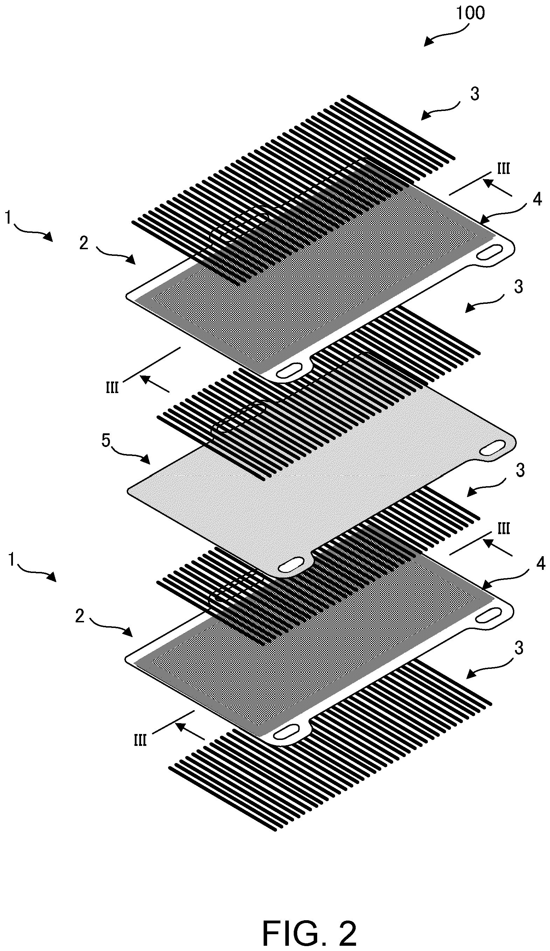

The power generation unit 1 includes a power generation cell 2, interconnectors 3 made of a metal, and seal members 4 that seal outer edges of the interconnectors 3. The interconnectors 3 are joined to both surfaces of an active area 2A which is a region contributing to power generation of the power generation cell 2. Further, the seal members 4 are joined to both surfaces of outer edge portions of the power generation cells 2 (see FIG. 2). Details of a method for joining the power generation cell 2 and the interconnector 3 will be described later.

FIG. 2 is an exploded perspective view in which two power generation units 1 are laminated. Although the solid oxide fuel cell 100 is formed by laminating a plurality of power generation units 1, the solid oxide fuel cell 100 is a stack of the two power generation units 1 in FIG. 2 for convenience.

As shown in FIG. 2, a separator 5 is interposed between the two power generation units 1. The two power generation units 1 are laminated by metal-joining the interconnector 3 of one power generation unit 1 to one surface of the separator 5 and the interconnector 3 of the other power generation unit 1 to the other surface of the separator 5. Although the two power generation units 1 are laminated in FIG. 2, more power generation units 1 can be laminated in the same manner.

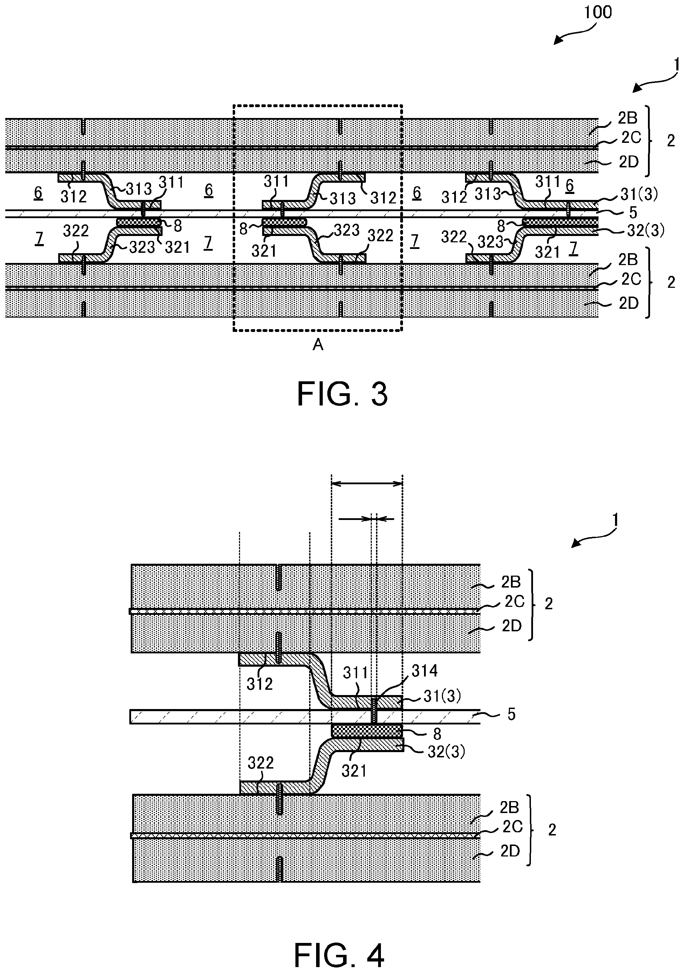

FIG. 3 is a view schematically showing a cross section taken along a line III-III in FIG. 2. In FIG. 3, for the sake of simplicity, an outer edge portion of the power generation unit 1 is omitted, and only a part of the cross section is shown in an enlarged manner. Here, a power generation unit in a state in which the interconnector 3 is joined to the power generation cell 2 and the separator 5 is referred to as the power generation unit 1.

As shown in FIG. 3, the power generation cell 2 includes a membrane electrode assembly 2C in which an anode electrode is disposed on one surface of a solid electrolyte layer and a cathode electrode is disposed on the other surface thereof, a cathode support layer 2B that supports the cathode electrode, and an anode support layer 2D that supports the anode electrode. The cathode support layer 2B and the anode support layer 2D are porous metal bodies configured not to inhibit supplies of an anode gas and a cathode gas, respectively, and are formed of, for example, ferritic stainless steel. In FIG. 3, the cathode electrode is disposed on an upper surface side of the membrane electrode assembly 2C, and the anode electrode is disposed on a lower surface side thereof.

The separator 5 has a power collecting function, and is disposed between two adjacent power generation cells 2 and separated from the cathode support layer (porous metal support layer) 2B and the anode support layer (porous metal support layer) 2D. The separator 5 forms an anode flow path 6 for supplying a fuel gas to the anode electrode between the anode support layer 2D of the power generation cell 2 (anode electrode side of the power generation cell 2) and the separator 5. Further, the separator 5 forms a cathode flow path 7 for supplying air to the cathode electrode between the cathode support layer 2B of the power generation cell 2 (cathode electrode side of the power generation cell 2) and the separator 5. A material constituting the separator 5 is not particularly limited as long as the material is a conductive and thermally conductive material, but for example, an alloy containing iron (Fe) or chromium (Cr), a metal, or the like is used, and ferritic stainless steel is preferably used.

The interconnector 3 has a power collecting function, is disposed between the active area 2A of the power generation cell 2 and the separator 5, and connects the separator 5 and the porous metal support layers 2B and 2D. The interconnector 3 includes an anode-side interconnector 31 disposed between the anode support layer (porous metal support layer on the anode electrode side) 2D of the power generation cell 2 and the separator 5, and a cathode-side interconnector 32 disposed between the cathode support layer (porous metal support layer on the cathode electrode side) 2B of the power generation cell 2 and the separator 5. A material constituting the interconnector 3 is not particularly limited as long as the material is a conductive and thermally conductive material, and for example, ferritic stainless steel containing aluminum or the like is used.

The anode-side interconnector 31 includes a first joining portion 311 joined to an upper surface of the separator 5 and a second joining portion 312 joined to a lower surface of the anode support layer 2D, and the first joining portion 311 and the second joining portion 312 are connected to each other by a connecting portion 313. Here, the anode-side interconnector 31 and the separator 5 are welded at the first joining portion 311, and the anode-side interconnector 31 and the anode support layer 2D are welded at the second joining portion 312. In the present embodiment, laser welding is used as a welding method, but the present invention is not limited thereto.

The anode-side interconnector 31 is formed by arranging a plurality of members each including the first joining portion 311, the second joining portion 312, and the connecting portion 313 in a width direction of the separator 5. Accordingly, the anode flow path 6 between the separator 5 and the anode support layer 2D is partitioned into a plurality of flow paths surrounded by the separator 5, the anode-side interconnector 31, and the anode support layer 2D.

The cathode-side interconnector 32 includes a third joining portion 321 joined to a lower surface of the separator 5 and a fourth joining portion 322 joined to an upper surface of the cathode support layer 2B, and the third joining portion 321 and the fourth joining portion 322 are connected to each other by a connecting portion 323. Here, the cathode-side interconnector 32 and the separator 5 are joined to each other at the third joining portion 321 by diffusion joining using a joining material 8 made of a metal, and the cathode-side interconnector 32 and the cathode support layer 2B are welded to each other at the fourth joining portion 322.

The cathode-side interconnector 32 is formed by arranging a plurality of members each including the third joining portion 321, the fourth joining portion 322, and the connecting portion 323 in the width direction of the separator 5. Accordingly, the cathode flow path 7 between the separator 5 and the cathode support layer 2B is partitioned into a plurality of flow paths surrounded by the separator 5, the cathode-side interconnector 32, and the cathode support layer 2B.

A thickness of the separator 5 is preferably formed to be equal to or less than a thickness of the interconnector 3. For example, the interconnector 3 has a thickness of 0.1 mm to 0.3 mm, and the separator 5 has a thickness of 10 pm to 100 pm. In this way, increasing the thickness of the interconnector 3 increases an energizing area of the interconnector 3, and decreasing the thickness of the separator 5 shortens an energizing distance of the separator 5. Therefore, resistance of an energizing path is reduced, and power generation efficiency is improved.

As described above, in the solid oxide fuel cell 100, the interconnector 3 and the porous metal support layers 2B and 2D are joined by the welding. When the joining is performed by the welding in this manner, the joining between the interconnector 3 and the porous metal support layers 2B and 2D is stronger compared to the joining using the contact paste, the brazing, or the like, and thus robustness against displacement during operation of the fuel cell 100, creep of a base material, or the like is improved. Further, in the case of welding, since joining interfaces between the interconnector 3 and the porous metal support layers 2B and 2D are melted, initial surface layers (oxide films) of the interconnector 3 and the porous metal support layers 2B and 2D are removed, and resistance of a joining portion is reduced. That is, in the welding, resistance between the interconnector 3 and the porous metal support layers 2B and 2D is low and conductivity is excellent compared to other joining methods. Therefore, the power generation efficiency of the power generation unit 1 (fuel cell 100) is improved. Further, since the welding requires no additional material and is therefore less costly than other joining methods.

However, when the metal and a porous layer are welded, there is a problem that defects such as blowholes are likely to occur. Therefore, when the interconnector 3 or the separator 5, which is a metal member, is welded to the porous metal support layers 2B and 2D, a crack or the like may occur in the interconnector 3 or separator 5 due to a welding defect. At this time, if the anode flow path 6 and the cathode flow path 7 are formed by only the porous metal support layers 2B and 2D and one metal member (interconnector 3 or separator 5), a gas leakage may cause the anode gas and the cathode gas to mix, which may reduce the power generation efficiency.

In contrast, in the present embodiment, the anode flow path 6 and the cathode flow path 7 are partitioned by the separator 5 provided apart from the porous metal support layers 2B and 2D. That is, gas flow paths (anode flow path 6 and cathode flow path 7) are formed using the interconnector 3 and the separator 5, and the interconnector 3 and the porous metal support layers 2B and 2D are welded. Therefore, even if the crack or the like occurs in the interconnector 3 due to the welding defect, the anode gas and the cathode gas are not mixed since the anode flow path 6 and the cathode flow path 7 are partitioned by the separator 5. Therefore, the decrease in power generation efficiency is prevented. Further, since the separator 5 is not welded to the porous metal support layers 2B and 2D, the thickness of the separator 5 can be reduced, and the power generation efficiency is further improved. Furthermore, since the thickness of the separator 5 can be reduced, a weight of the fuel cell 100 can be reduced, and since a dimension of the power generation cell 2 in a lamination direction can be reduced, the fuel cell 100 can be made compact. A thermal capacity can also be reduced by reducing the thickness of the separator 5.

Hereinafter, referring to FIGS. 3 and 4, details of joining of the interconnector 3 to the separator 5 and joining of the interconnector 3 to the porous metal support layers 2B and 2D will be described.

As described above, the anode-side interconnector 31 is joined to the separator 5 by the welding at the first joining portion 311, and is joined to the anode support layer 2D by the welding at the second joining portion 312. Therefore, as compared with the other joining methods, the joining of the anode-side interconnector 31 to the separator 5 and the joining of the anode-side interconnector 31 to the anode support layer 2D become stronger. Further, since a joining interface between the anode-side interconnector 31 and the separator 5 and a joining interface between the anode-side interconnector 31 and the anode support layer 2D are melted by the welding, initial surface layers (oxide films) of base materials (anode-side interconnector 31, separator 5, and anode support layer 2D) are broken, the resistance of the joining portion is reduced, and the conductivity is improved.

As shown in FIG. 3, at the first joining portion 311, contact surfaces of the anode-side interconnector 31 and the separator 5 are both formed flat, and at the second joining portion 312, contact surfaces of the anode-side interconnector 31 and the anode support layer 2D are both formed flat. That is, the anode-side interconnector 31 and the separator 5 are in plane contact with each other, and the anode-side interconnector 31 and the anode support layer 2D are in plane contact with each other.

In this way, since the anode-side interconnector 31 and the separator 5 are in plane contact with each other, a direction of force generated by expansion of the anode flow path 6 during a heat input to the power generation unit 1 (fuel cell 100) is a compression direction (direction perpendicular to the separator 5 from the anode-side interconnector 31). Therefore, peeling of the anode-side interconnector 31 from the separator 5 due to a heat input strain is prevented.

Since the anode-side interconnector 31 and the anode support layer 2D are in plane contact with each other, a large contact area between the anode-side interconnector 31 and the anode support layer 2D is ensured. Accordingly, a stress between the anode-side interconnector 31 and the anode support layer 2D at the time of thermal expansion or the like is reduced, and the power generation cell 2 is prevented from being damaged by a depression or the like of the anode support layer 2D.

On the other hand, as described above, the cathode-side interconnector 32 is joined to the separator 5 at the third joining portion 321 by the diffusion joining using the joining material 8 made of a metal, and is joined to the cathode support layer 2B at the fourth joining portion 322 by the welding. Here, in a state in which the power generation units 1 are in contact with each other, a welding machine cannot access the first to fourth joining portions 311, 312, 321, and 322. Therefore, it is necessary to use a joining method other than the welding for one of the first to fourth joining portions 311, 312, 321, and 322. Therefore, in the present embodiment, the welding is not used for the joining (third joining portion 321) of the cathode-side interconnector 32 and the separator 5. The diffusion joining between the cathode-side interconnector 32 and the separator 5 is performed by sandwiching the joining material 8 between the cathode-side interconnector 32 and the separator 5, and pressing and heating the joining material 8, but a reaction proceeds by the heat input under the operation of the fuel cell 100. Therefore, during the operation of the fuel cell 100, the joining has lower resistance and higher strength.

Preferably, the separator 5 is formed in a planar shape at least on the active area 2A of the power generation cell 2. Accordingly, a dimensional variation of the fuel cell 100 in the lamination direction is prevented, and a contact property between the cathode-side interconnector 32 and the separator 5 is improved. Therefore, a quality of the diffusion joining is improved.

As shown in FIG. 3, at the third joining portion 321, contact surfaces of the cathode-side interconnector 32 and the separator 5 are both formed flat, and at the fourth joining portion 322, contact surfaces of the cathode-side interconnector 32 and the cathode support layer 2B are both formed flat. That is, the cathode-side interconnector 32 and the separator 5 are in plane contact with each other, and the cathode-side interconnector 32 and the cathode support layer 2B are in plane contact with each other.

In this way, since the cathode-side interconnector 32 and the separator 5 are in plane contact with each other, a direction of force generated by expansion of the cathode flow path 7 at the time of the heat input of the power generation unit 1 (fuel cell 100) is a compression direction (direction perpendicular to the separator 5 from the cathode-side interconnector 32), similarly to the anode side. Therefore, peeling of the cathode-side interconnector 32 from the separator 5 due to the heat input strain is prevented.

Since the cathode-side interconnector 32 and the cathode support layer 2B are in plane contact with each other, a large contact area between the cathode-side interconnector 32 and the cathode support layer 2B is ensured. Accordingly, a stress between the cathode-side interconnector 32 and the cathode support layer 2B at the time of the thermal expansion or the like is reduced, and the power generation cell 2 is prevented from being damaged due to a depression or the like of the cathode support layer 2B.

As the joining material 8 used for the diffusion joining of the cathode-side interconnector 32 and the separator 5, a metal different from those of the cathode-side interconnector 32 and the separator 5 is used, and for example, a metal in which a coefficient of linear expansion is in a range of 0% to 50% is used. Specifically, in the present embodiment, nickel (Ni) or a nickel alloy is used. A form of the joining material 8 is not particularly limited, and for example, a Ni paste, a Ni sheet, a Ni wire, a Ni coating, or the like can be used. By using a metal having a coefficient of linear expansion in a range of 0% to 50%, such as nickel (Ni), as the joining material 8, an increase in thermal expansion difference between the base materials (cathode-side interconnector 32 and separator 5) and the joining material 8 is prevented. Further, since the joining material 8 having a smaller thickness than the base materials (cathode-side interconnector 32 and separator 5) is plastically deformed first, the joining portion (third joining portion 321) between the cathode-side interconnector 32 and the separator 5 is protected.

In the case in which the anode-side interconnector 31 and the separator 5 or the anode support layer 2D are diffusion-joined to each other, the joining material 8, which is the metal different from those of the interconnector 3 and the separator 5, may react with a fuel to cause a defect in the joining or effect the anode gas. In particular, nickel (Ni) used in the present embodiment easily reacts with the fuel, and there is a possibility that the effect on the anode gas becomes larger. In contrast, in the present embodiment, the diffusion joining using the metal (nickel) is used for the joining of the cathode-side interconnector 32 and the separator 5, and thus the joining material 8 is prevented from reacting with the fuel, thereby preventing the defect of the joining and the effect on the anode gas.

FIG. 4 is an enlarged view of a portion surrounded by a rectangle A in FIG. 3.

As shown in FIG. 4, the anode-side interconnector 31 and the cathode-side interconnector 32 are joined to the separator 5 such that the first joining portion 311 and the third joining portion 321 overlap with each other as viewed in the lamination direction of the power generation cells 2. Accordingly, an energizing distance between the anode-side interconnector 31 and the cathode-side interconnector 32 is minimized. Since electric resistance is proportional to the energizing distance, resistance between the anode-side interconnector 31 and the cathode-side interconnector 32 can be minimized by causing the first joining portion 311 to overlap with the third joining portion 321 as viewed in the lamination direction of the power generation cells 2. Therefore, the power generation efficiency of the fuel cell 100 is improved. Further, since the first joining portion 311 and the third joining portion 321 overlap with each other as viewed in the lamination direction of the power generation cells 2, rigidity of the joining portions 311 and 321 is enhanced.

As shown in FIG. 4, the first joining portion 311 at which the anode-side interconnector 31 and the separator 5 are joined (brought into contact with each other) includes a weld portion 314 where the anode-side interconnector 31 and the separator 5 are welded. Further, as shown in FIG. 4, the third joining portion 321 at which the cathode-side interconnector 32 and the separator 5 are diffusion-joined is formed in a manner of covering the weld portion 314 formed in the first joining portion 311 as viewed in the lamination direction of the power generation cells 2. Accordingly, initial surface layers (oxide films) of the separator 5, the metal joining material 8, and the cathode-side interconnector 32 at the third joining portion 321 are removed by a heat input due to the welding of the anode-side interconnector 31 and the separator 5, and the electric resistance between the cathode-side interconnector 32 and the separator 5 is reduced.

As shown in FIG. 4, the second joining portion 312 at which the anode-side interconnector 31 and the anode support layer 2D are joined and the fourth joining portion 322 at which the cathode-side interconnector 32 and the cathode support layer 2B are joined are formed at corresponding (opposing) positions (overlapping positions in the lamination direction) as viewed in a cross-sectional direction of the power generation cell 2. A load at the time of fastening or thermal expansion of layers of the power generation cell 2 is received by the anode-side interconnector 31 and the cathode-side interconnector 32, but since the second joining portion 312 and the fourth joining portion 322 are formed at the corresponding positions as viewed in the cross-sectional direction of the power generation cell 2, a bending input to the power generation cell 2 is prevented. Therefore, the damage to the power generation cell 2 is prevented.

As in the present embodiment, the first joining portion 311 and the third joining portion 321 are configured to completely overlap with each other as viewed in the lamination direction of the power generation cells 2, so that the rigidity of the joining portions 311 and 321 is further enhanced. When the first joining portion 311 and the third joining portion 321 are at least partially overlapped with each other as viewed in the lamination direction of the power generation cell 2, an energizing distance is shortened and the power generation efficiency is improved as compared with the case in which the first joining portion 311 and the third joining portion 321 are separated from each other.

According to the solid oxide fuel cell 100 of the above-described embodiment, the following effects can be obtained.

The solid oxide fuel cell 100 includes the separator 5 provided between the power generation cells 2 and separated from the porous metal support layers 2B and 2D, and the interconnector 3 located between the separator 5 and the porous metal support layers 2B and 2D, the anode flow path 6 is formed between the anode electrode side of the power generation cell 2 and the separator 5, and the cathode flow path 7 is formed between the cathode electrode side of the power generation cell 2 and the separator 5. Further, the interconnector 3 is welded to the porous metal support layers 2B and 2D. In this way, since the anode flow path 6 and the cathode flow path 7 are partitioned by the separator 5 provided apart from the porous metal support layers 2B and 2D, even if the crack occurs in the interconnector 3 due to the welding defect between the interconnector 3 and the porous metal support layers 2B and 2D, the anode gas and the cathode gas are not mixed. That is, since the decrease in power generation efficiency is prevented, it is possible to provide the solid oxide fuel cell 100 having good power generation efficiency.

Since the interconnector 3 and the porous metal support layers 2B and 2D are joined by the welding, the joining is stronger and the robustness is improved as compared with the other joining methods. Further, the joining interfaces between the interconnector 3 and the porous metal support layers 2B and 2D are melted by the heat input during the welding, and the initial surface layers (oxide films) of the interconnector 3 and the porous metal support layers 2B and 2D are removed, and thus the resistance of the joining portion decreases and the power generation efficiency is improved. Further, since the welding requires no additional material, resulting in a lower cost.

Since the separator 5 is not welded to the porous metal support layers 2B and 2D, the thickness of the separator 5 can be reduced, and the power generation efficiency is further improved. Furthermore, since the thickness of the separator 5 can be reduced, a weight of the fuel cell 100 can be reduced, and since a dimension of the power generation cell 2 in the lamination direction can be reduced, the fuel cell 100 can be made compact.

In the solid oxide fuel cell 100, the interconnector 3 includes the anode-side interconnector 31 including the first joining portion 311 joined to the separator 5 and the second joining portion 312 joined to the anode support layer (porous metal support layer on the anode electrode side) 2D, and the cathode-side interconnector 32 including the third joining portion 321 joined to the separator 5 and the fourth joining portion 322 joined to the cathode support layer (porous metal support layer on the cathode electrode side) 2B. Further, the anode-side interconnector 31 is welded to the anode support layer (porous metal support layer on the anode electrode side) 2D at the second joining portion 312, and the cathode-side interconnector 32 is welded to the cathode support layer (porous metal support layer on the cathode electrode side) 2B at the fourth joining portion 322. In this way, since the interconnector 3 is welded to both the porous metal support layers 2B and 2D on the anode electrode side and the cathode electrode side, the power generation efficiency of the fuel cell 100 is further improved.

The solid oxide fuel cell 100 is configured such that the first joining portion 311 at which the anode-side interconnector 31 is joined to the separator 5 and the third joining portion 321 at which the cathode-side interconnector 32 is joined to the separator 5 at least partially overlap with each other as viewed in the lamination direction of the power generation cells 2. Accordingly, the energizing distance between the anode-side interconnector 31 and the cathode-side interconnector 32 is shortened, and the electric resistance can be reduced. That is, the power generation efficiency of the fuel cell 100 is further improved. Further, since the first joining portion 311 and the third joining portion 321 overlap with each other as viewed in the lamination direction of the power generation cells 2, the rigidity of the joining portions 311 and 321 is enhanced.

In the solid oxide fuel cell 100, the anode-side interconnector 31 is welded to the separator 5. Therefore, the joining between the anode-side interconnector 31 and the separator 5 becomes stronger, and the robustness is improved. Further, the joining interfaces between the anode-side interconnector 31 and the separator 5 are melted by the heat input during the welding, and the initial surface layers (oxide films) of the anode-side interconnector 31 and the separator 5 are removed, and thus the resistance of the joining portion decreases and the power generation efficiency is improved. Furthermore, since the welding requires no additional material, resulting in a lower cost.

In the solid oxide fuel cell 100, the cathode-side interconnector 32 and the separator 5 are diffusion-joined using the joining material 8 made of the metal different from those of the cathode-side interconnector 32 and the separator 5. The diffusion joining using the metal is joining having lower resistance and higher strength during the operation of the fuel cell 100 since the reaction proceeds by the heat input during the operation of the fuel cell 100.

Further, the cathode-side interconnector 32 and the separator 5 are diffusion-joined to each other by the metal (joining material 8), and the diffusion joining using the joining material 8 is not used for the method for joining the anode-side interconnector 31 and the separator 5. This prevents the joining material 8 from reacting with the fuel to cause the defect in the joining, or from affecting the anode gas. Therefore, the decrease in the power generation efficiency of the fuel cell 100 is prevented.

In the solid oxide fuel cell 100, the joining material 8 that diffusion-joins the cathode-side interconnector 32 and the separator 5 is nickel (Ni) or a nickel alloy. By using nickel or the nickel alloy for the joining material 8, the increase in the thermal expansion difference between the base materials (cathode-side interconnector 32 and separator 5) and the joining material 8 is prevented. Further, since the joining material 8 having the smaller thickness than the base materials (cathode-side interconnector 32 and separator 5) is plastically deformed first, the joining portion (third joining portion 321) between the cathode-side interconnector 32 and the separator 5 is protected.

In the solid oxide fuel cell 100, the interconnector 3 and the separator 5 are in plane contact with each other. Accordingly, a direction of force generated by the expansion of the anode and cathode flow paths 6 and 7 at the time of the heat input of the power generation unit 1 (fuel cell 100) is a compression direction (direction perpendicular to the separator 5 from the interconnector 3). Therefore, peeling of the interconnector 3 from the separator 5 due to the heat input strain is prevented.

In the solid oxide fuel cell 100, the third joining portion 321 at which the cathode-side interconnector 32 and the separator 5 are joined is formed in a manner of covering the weld portion 314 at which the anode-side interconnector 31 and the separator 5 are welded. Accordingly, the initial surface layers (oxide films) of the separator 5, the metal joining material 8, and the cathode-side interconnector 32 at the third joining portion 321 are removed by the heat input due to the welding of the anode-side interconnector 31 and the separator 5, and the electric resistance between the cathode-side interconnector 32 and the separator 5 is reduced. Therefore, the power generation efficiency of the fuel cell 100 is improved.

In the solid oxide fuel cell 100, the second joining portion 312 at which the anode-side interconnector 31 and the anode support layer 2D are joined and the fourth joining portion 322 at which the cathode-side interconnector 32 and the cathode support layer 2B are joined are formed at the corresponding (opposing) positions (overlapping positions in the lamination direction) as viewed in the cross-sectional direction of the power generation cell 2. Accordingly, the bending input to the power generation cell 2 is prevented, and the power generation cell 2 is prevented from being damaged.

In the solid oxide fuel cell 100, the interconnector 3 and the porous metal support layers 2B and 2D are in plane contact with each other at the second joining portion 312 and the fourth joining portion 322. This ensures large contact areas between the interconnector 3 and the porous metal support layers 2B and 2D. Therefore, stresses between the interconnector 3 and the porous metal support layers 2B and 2D at the time of the thermal expansion or the like are reduced, and the power generation cell 2 is prevented from being damaged by the depression or the like of the porous metal support layers 2B and 2D.

In the solid oxide fuel cell 100, the separator 5 is formed in the planar shape at least on the active area 2A of the power generation cell 2. Accordingly, the dimensional variation of the fuel cell 100 in the lamination direction is prevented, and the contact property between the cathode-side interconnector 32 and the separator 5 is improved. Therefore, the quality of the diffusion joining is improved.

In the solid oxide fuel cell 100, the thickness of the separator 5 is equal to or less than the thickness of the interconnector 3. Increasing the thickness of the interconnector 3 increases the energizing area of the interconnector 3, and decreasing the thickness of the separator 5 shortens the energizing distance of the separator 5. Therefore, the resistance of the energizing path is reduced, and the power generation efficiency is improved.

A positional relationship among the anode-side interconnector 31, the cathode-side interconnector 32, and the separator 5, a size of the joining portion, and the like shown in the present embodiment are preferred embodiments, and are not necessarily limited thereto. At least, if the anode flow path 6 and the cathode flow path 7 are partitioned by the separator 5, and the interconnector 3 and the porous metal support layers 2B and 2D are welded, the effects such as improved robustness and power generation efficiency can be obtained.

In the present embodiment, the power generation cell 2 includes the porous metal support layers 2B and 2D on both the anode electrode side and the cathode electrode side, but the configuration is not necessarily limited to this, and the power generation cell 2 may include a porous metal support only on either the anode electrode side or the cathode electrode side. In this case, the interconnector 3 and the porous metal support layer are welded, and the anode flow path 6 and the cathode flow path 7 are partitioned by the separator 5, and thus the power generation efficiency is improved and the mixing of the anode gas and the cathode gas is prevented.

As in the present embodiment, it is preferable that the cathode-side interconnector 32 and the separator 5 are diffusion-joined at the third joining portion 321, but the joining portion using the diffusion joining is not necessarily limited to the third joining portion 321. For example, the anode-side interconnector 31 and the separator 5 may be diffusion-joined at the first joining portion 311. In this case, the interconnector 3 and the porous metal support layer are welded, and the anode flow path 6 and the cathode flow path 7 are partitioned by the separator 5, and thus the power generation efficiency is improved and the mixing of the anode gas and the cathode gas is prevented.

In the present embodiment, a joining method other than the welding and the diffusion joining are used, but the present invention is not necessarily limited thereto, and for example, the cathode-side interconnector 32 and the separator 5 may be joined using brazing or a contact paste.

In the present embodiment, the joining material 8 used for the diffusion joining between the cathode-side interconnector 32 and the separator 5 is nickel (Ni), but the joining material 8 is not necessarily limited thereto. For example, gold (Au) or a gold alloy having a coefficient of linear expansion in a range of 0% to 50% similarly to nickel (Ni) may be used as the joining material 8.

As the joining material 8, for example, copper (Cu) or a copper alloy containing 80% or more of copper (Cu) may be used. By using a material having high ductility such as copper (Cu) or a copper alloy, it is possible to absorb the thermal expansion difference between the joining material 8 and the base materials (cathode-side interconnector 32 and separator 5), and a stress applied to the third joining portion 321 is prevented. That is, the joining portion between the cathode-side interconnector 32 and the separator 5 is protected. Further, as the joining material 8, silver (Ag) or platinum (Pt) having high ductility similarly to copper may be used. A copper alloy containing 80% or more of copper (Cu) is classified as copper (Cu) in Japanese Industrial Standards (JIS).

Although the embodiment of the present invention has been described above, the above-mentioned embodiment is merely a part of application examples of the present invention, and is not intend to limit the technical scope of the present invention to the specific configurations of the above-mentioned embodiment.

## Claims

1. A solid oxide fuel cell comprising:
a plurality of laminated power generation cells each including a solid electrolyte layer, an anode electrode disposed on one surface of the solid electrolyte layer, a cathode electrode disposed on the other surface of the solid electrolyte layer, and a porous metal support layer disposed on at least one of an anode electrode side or a cathode electrode side;
a separator provided between the power generation cells and separated from the porous metal support layer; and
an interconnector located between the separator and the porous metal support layer, wherein
an anode flow path for supplying a fuel to the anode electrode is formed between the anode electrode side of the power generation cell and the separator, and a cathode flow path for supplying air to the cathode electrode is formed between the cathode electrode side of the power generation cell and the separator, and
the interconnector includes a portion joined to the separator and a portion joined to the porous metal support layer, and is welded to the porous metal support layer at the portion joined to the porous metal support layer.

2. The solid oxide fuel cell according to claim 1, wherein
the power generation cell includes the porous metal support layer on both the anode electrode side and the cathode electrode side,
the interconnector includes an anode-side interconnector including a first joining portion joined to the separator and a second joining portion joined to the porous metal support layer on the anode electrode side, and a cathode-side interconnector including a third joining portion joined to the separator and a fourth joining portion joined to the porous metal support layer on the cathode electrode side,
the anode-side interconnector is welded to the porous metal support layer on the anode electrode side at the second joining portion, and
the cathode-side interconnector is welded to the porous metal support layer on the cathode electrode side at the fourth joining portion.

3. The solid oxide fuel cell according to claim 2, wherein
the first joining portion and the third joining portion at least partially overlap with each other as viewed in a lamination direction of the power generation cells.

4. The solid oxide fuel cell according to claim 2 or 3, wherein
the anode-side interconnector is welded to the separator at the first joining portion, and
the cathode-side interconnector is joined to the separator at the third joining portion by a joining method other than welding.

5. The solid oxide fuel cell according to claim 4, wherein
the cathode-side interconnector and the separator are diffusion-joined at the third joining portion using a joining material made of a metal different from materials of the cathode-side interconnector and the separator.

6. The solid oxide fuel cell according to claim 5, wherein
the joining material is nickel or a nickel alloy, or gold or a gold alloy.

7. The solid oxide fuel cell according to claim 5, wherein
the joining material is copper or a copper alloy.

8. The solid oxide fuel cell according to any one of claims 2 to 7, wherein
the interconnector and the separator are in plane contact with each other at the first joining portion and the third joining portion.

9. The solid oxide fuel cell according to any one of claims 2 to 8, wherein
the anode-side interconnector is welded to the separator at the first joining portion, and
the third joining portion is formed in a manner of covering a weld portion in the first joining portion as viewed in the lamination direction of the power generation cells.

10. The solid oxide fuel cell according to any one of claims 2 to 9, wherein
the second joining portion and the fourth joining portion are formed at opposing positions as viewed in a cross-sectional direction of the power generation cell.

11. The solid oxide fuel cell according to any one of claims 2 to 10, wherein
the interconnector and the porous metal support layer are in plane contact with each other at the second joining portion and the fourth joining portion.

12. The solid oxide fuel cell according to any one of claims 1 to 11, wherein
the separator is formed in a planar shape at least on an active area which is a region contributing to power generation of the power generation cell.

13. The solid oxide fuel cell according to any one of claims 1 to 12, wherein
a thickness of the separator is equal to or less than a thickness of the interconnector.
